# EUROPEAN PATENT APPLICATION

(11) **EP 4 391 264 A1**
(43) Date of publication of application: **26.06.2024**
(21) Application number: 22858382.9
(22) Date of filing: 09.08.2022
(51) Int. Cl.: H02H 7/08, F04B 53/00, F04D 29/00

(54) **POWER SUPPLY DEVICE AND POWER SUPPLY METHOD FOR SUBMERGED PUMP**

(30) Priority: 17.08.2021 JP 2021132901
(71) Applicant: EBARA CORPORATION, Ota-ku, Tokyo 144-8510 (JP)
(72) Inventor: HONDA, Shuichiro, Tokyo 144-8510 (JP); KASATANI, Tetsuji, Tokyo 144-8510 (JP); IKEDA, Hayato, Tokyo 144-8510 (JP); IWAMI, Mitsutaka, Tokyo 144-8510 (JP); WATAJI, Kei, Tokyo 144-8510 (JP); KIKUCHI, Hyuga, Tokyo 144-8510 (JP)
(74) Representative: Schmidbauer, Andreas Konrad
(86) International application number: PCT/JP2022/030385
(87) International publication number: WO 2023/022061

(57) **Abstract**

The present invention relates to a power feeding apparatus and a power feeding method for supplying electric power to a submersible pump for delivering liquefied gas, such as liquefied ammonia, liquefied natural gas (LNG), or liquid hydrogen. The power feeding apparatus (15) includes a first electrical contact (21) secured to the submersible pump (7) and electrically coupled to an electric motor (7a) of the submersible pump (7); a second electrical contact (22) configured to contact the first electrical contact (21); and a power cable (25) electrically coupled to the second electrical contact (22). At least a part of the second electrical contact (22) is located in a pump column (10) in which the submersible pump (7) is arranged.

## Description

### Technical Field

The present invention relates to a power feeding apparatus and a power feeding method of supplying electric power to a submersible pump for delivering liquefied gas, such as liquefied ammonia, liquefied natural gas (LNG), or liquid hydrogen.

### Background Art

Natural gas is widely used for thermal power generation and used as a raw material for chemicals. Furthermore, ammonia and hydrogen are expected to be energies that do not generate carbon dioxide that causes global warming. Applications of hydrogen as an energy include fuel cell and turbine power generation. Natural gas, ammonia, and hydrogen are in a gaseous state at normal temperature, and therefore natural gas, ammonia, and hydrogen are cooled and liquefied for their storage and transportation. Liquefied gas, such as liquefied natural gas (LNG), liquefied ammonia, and liquefied hydrogen, is temporarily stored in a liquefied-gas storage tank and then delivered to a power plant, factory, or the like by a pump.

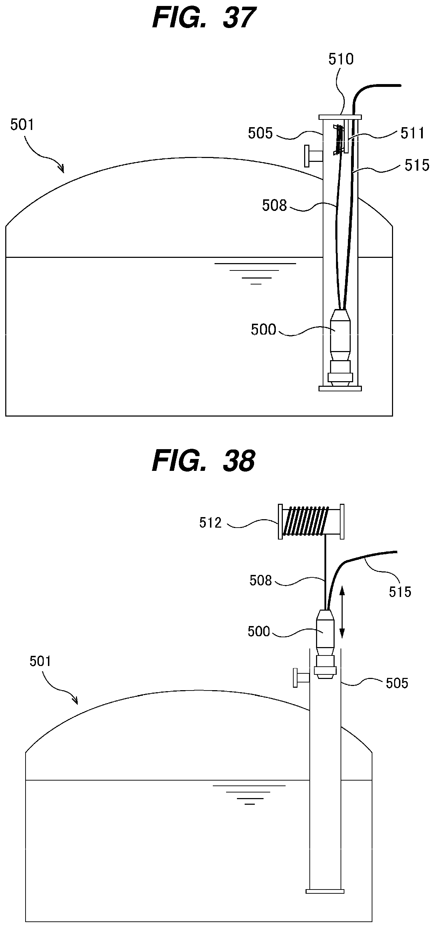

FIG. 37 is a schematic diagram showing a conventional example of a liquefied-gas storage tank in which liquefied gas is stored and a pump for pumping up the liquefied gas. A pump 500 is installed in a vertical pump column 505 disposed in a liquefied-gas storage tank 501. A power cable 515 is coupled to a motor of the pump 500, and electric power is supplied to the motor of the pump 500 through the power cable 515. The power cable 515 extends from an inside to an outside of the pump column 505, and is coupled to a power supply source (e.g., commercial power supply source) which is not shown.

The inside of the pump column 505 is filled with the liquefied gas, and the entire pump 500 and the power cable 515 are immersed in the liquefied gas. The pump 500 is thus a submersible pump that can operate in the liquefied gas. When the pump 500 is operated, the liquefied gas in the liquefied-gas storage tank 501 is sucked into the pump column 505, ascends in the pump column 505, and is discharged from the pump column 505.

The pump 500 is housed in the pump column 505 with a cable 508 coupled to the top of the pump 500. An upper portion of the cable 508 is wound around a cable holder 511 extending from an upper lid 510 into the pump column 505 and held by the cable holder 511. A lower end of the cable 508 is coupled to the pump 500. Accordingly, the cable 508 is also housed in the pump column 505, as well as the pump 500.

The cable 508 is used to carry the pump 500 into and out of the pump column 505. The cable 508 remains coupled to the pump 500, so that a need to couple the cable 508 to the pump 500 can be eliminated when the pump 500 is to be raised. During operation of the pump 500, the cable 508 is immersed in the liquefied gas in the pump column 505 together with the pump 500.

FIG. 38 is a diagram for explaining an operation of carrying the pump 500 into the pump column 505 and an operation of pulling up the pump 500 out of the pump column 505. An upper end of the cable 508 is coupled to a hoist 512 when the pump 500 is to be installed in the pump column 505 and when the pump 500 is to be elevated from the pump column 505 for the purpose of maintenance. The pump 500 is suspended by the cable 508 and is elevated and lowered in the pump column 505 by the hoist 512. As the pump 500 is elevated and lowered, the cable 508 is also elevated and lowered.

The pump 500 is a machine that contains consumables, and therefore the pump 500 requires regular maintenance. When the pump 500 is installed in the pump column 505 for the first time and when the pump 500 is returned to the pump column 505 after the maintenance, it is necessary to prevent air, entrained by the pump 500, from entering the pump column 505. If air enters the pump column 505 together with the pump 500, moisture in the air will be cooled and solidified by the ultra-low temperature liquefied gas, and as a result, the rotation of the pump 500 will be hindered. In particular, when the liquefied gas is liquid hydrogen, nitrogen and oxygen in the air are liquefied or solidified and may be mixed into the liquefied gas. The solidification of nitrogen and oxygen can damage equipment. Moreover, mixture of the liquefied oxygen and the liquid hydrogen can cause an explosion.

When the pump 500 is removed from the pump column 505 for the purpose of maintenance, etc., it is also necessary to prevent ambient air from entering the pump column 505. Specifically, the pump 500 that has been in contact with the liquefied gas has an extremely low temperature, and when the air contacts such low-temperature pump 500, a component, such as nitrogen, contained in the air is liquefied on the surface of the pump 500, and may fall into the pump column 505 and may be mixed with the liquefied gas. Especially when the liquefied gas is liquid hydrogen, the following problem may occur. The temperature of liquid hydrogen is -253°C or less, and therefore the pump 500 just removed from the pump column 505 also has an ultra-low temperature equivalent to that of the liquid hydrogen. When the air comes into contact with such ultra-low temperature pump 500, not only the nitrogen in the air but also the oxygen is liquefied. If the liquefied oxygen drops into the liquefied-gas storage tank 501 and mixes with the liquid hydrogen, an explosion may occur, which is extremely dangerous.

Therefore, in order to avoid the above problems, before the pump 500 is carried into the pump column 505, a dry-up operation is performed in which the pump 500 is exposed to a purge gas in a purge container so that the air and moisture are removed from the pump 500. Similarly, immediately after the pump 500 is carried out of the pump column 505, a hot-up operation is performed in which the pump 500 is exposed to a purge gas in the purge container so that the pump 500 is warmed by the purge gas.

### Citation List

### Patent Literature

Patent document 1: Japanese Patent No. 3197645
Patent document 2: Japanese Patent No. 3198248
Patent document 3: Japanese Patent No. 3472379

### Summary of Invention

### Technical Problem

The dry-up operation and the hot-up operation described above can solve the above problems related to the pump 500. However, not only the pump 500 but also the power cable 515 can cause similar problems. One possible solution is to perform the dry-up operation and the hot-up operation for the power cable 515 in the purge container. However, the pump column 505 for liquefied gas is typically very long in a vertical direction, and its length may be tens of meters. As a result, the power cable 515 coupled to the pump 500 installed at the bottom of the pump column 505 is also necessarily very long. It is a very hard work to install such long power cable 515 in the purge container. Furthermore, as the pump 500 is moved into and out of the pump column 505, the power cable 515 may be damaged. If the power cable 515 is damaged, repair of the power cable 515 or replacement of the power cable 515 is required, thus incurring labor and cost.

Accordingly, the present invention provides a power feeding apparatus and a power feeding method that eliminate a need to carry a power cable into a pump column together with a pump and eliminate a need to remove the power cable from the pump column together with the pump.

### Solution to Problem

In an embodiment, there is provided a power feeding apparatus for supplying electric power to a submersible pump used to deliver liquefied gas, comprising: a first electrical contact secured to the submersible pump and electrically coupled to an electric motor of the submersible pump; a second electrical contact configured to contact the first electrical contact, at least a part of the second electrical contact being located in a pump column in which the submersible pump is arranged; and a power cable electrically coupled to the second electrical contact.

In an embodiment, the first electrical contact and the second electrical contact are movable relative to each other in a longitudinal direction of the pump column while the first electrical contact and the second electrical contact are in contact with each other.

In an embodiment, an entirety of the second electrical contact is located in the pump column, and at least a part of the power cable is located in the pump column.

In an embodiment, a part of the second electrical contact is located outside the pump column, and an entirety of the power cable is located outside the pump column.

In an embodiment, the power feeding apparatus further comprises a positioning mechanism configured to determine relative positions of the first electrical contact and the second electrical contact in a circumferential direction of the submersible pump.

In an embodiment, the power cable is secured to an inner surface or an outer surface of the pump column.

In an embodiment, the power cable has structural resistance to a low temperature below a boiling point of the liquefied gas.

In an embodiment, the power feeding apparatus further comprises: a spring configured to press the first electrical contact against the second electrical contact; and a support structure that movably supports the first electrical contact, a horizontal gap being formed between the first electrical contact and the support structure.

In an embodiment, the first electrical contact has a tapered surface, and the second electrical contact has a reverse tapered surface having a shape that conforms to the tapered surface.

In an embodiment, the power feeding apparatus further comprises a positioning mechanism configured to determine relative positions of the first electrical contact and the second electrical contact in a circumferential direction of the submersible pump, the positioning mechanism including a combination of a guide rail and a guide follower, a horizontal gap between the first electrical contact and the support structure being larger than a horizontal gap between the guide rail and the guide follower.

In an embodiment, the power feeding apparatus further comprises: a spring configured to press the second electrical contact against the first electrical contact; and a support structure that movably supports the second electrical contact, a horizontal gap being formed between the second electrical contact and the support structure.

In an embodiment, the second electrical contact has a tapered surface, and the first electrical contact has a reverse tapered surface having a shape that conforms to the tapered surface.

In an embodiment, the power feeding apparatus further comprises a positioning mechanism configured to determine relative positions of the first electrical contact and the second electrical contact in a circumferential direction of the submersible pump, the positioning mechanism including a combination of a guide rail and a guide follower, a horizontal gap between the second electrical contact and the support structure being larger than a horizontal gap between the guide rail and the guide follower.

In an embodiment, the power feeding apparatus further comprises: pulleys and a power feeding connector arranged in the pump column; and a power feeding line electrically coupled to the power feeding connector, wherein the power cable comprises an endless power cable, the endless power cable is movably supported by the pulleys, the second electrical contact includes electrical connectors coupled to the endless power cable, one of the electrical connectors is detachably coupled to the first electrical contact, and another one of the electrical connectors is detachably coupled to the power feeding connector.

In an embodiment, the power cable comprises a metal interconnect embedded in an inner surface of the pump column, and a power feeding line electrically coupled to the metal interconnect.

In an embodiment, the power feeding apparatus further comprises a suspension structure extending in a vertical direction along an inner surface of the pump column, the suspension structure being removably arranged in the pump column, the second electrical contact being held by the suspension structure.

In an embodiment, the suspension structure extends from an upper portion to a lower portion of the pump column.

In an embodiment, the suspension structure has a guide groove or a guide rail with which a guide follower is engaged, the guide follower being mounted to the submersible pump.

In an embodiment, the second electrical contact comprises an electrode rail extending in a vertical direction from an upper portion to a lower portion of the pump column.

In an embodiment, the first electrical contact is configured to be movable on the electrode rail while engaging the electrode rail.

In an embodiment, the second electrical contact comprises an electrode bar embedded in an inner surface of the pump column.

In an embodiment, there is provided a pump system comprising: a submersible pump for delivering liquefied gas; a pump column in which the submersible pump is arranged; and the power feeding apparatus.

In an embodiment, there is provided a liquefied-gas tank facility comprising: a liquefied-gas storage tank for storing liquefied gas therein; a pump column arranged in the liquefied-gas storage tank; a submersible pump for delivering the liquefied gas, the submersible pump being arranged in the pump column; and the power feeding apparatus.

In an embodiment, there is provided a power feeding method for supplying electric power to a submersible pump used to deliver liquefied gas, comprising: lowering the submersible pump in a pump column by an elevating device; bringing a first electrical contact into contact with a second electrical contact, the first electrical contact being secured to the submersible pump and electrically coupled to an electric motor of the submersible pump, at least a part of the second electrical contact being located in the pump column; and supplying electric power from a power cable to the electric motor via the second electrical contact and the first electrical contact, the power cable being electrically coupled to the second electrical contact.

In an embodiment, the first electrical contact is brought into contact with the second electrical contact when the submersible pump is lowered to an operating position within the pump column.

In an embodiment, the first electrical contact is separated from the second electrical contact when the submersible pump is elevated from the operating position by the elevating device.

In an embodiment, the liquefied gas has an electrical insulating property.

### Advantageous Effects of Invention

According to the present invention, electrical connection is established between the first electrical contact and the second electrical contact when the first electrical contact and the second electrical contact come into contact with each other. Since the first electrical contact can be separated from the second electrical contact, the power cable and the second electrical contact can be permanently mounted to the pump column. Therefore, when the pump is carried into and out of the pump column, it is not necessary to carry the power cable into and out of the pump column together with the pump.

### Brief Description of Drawings

[FIG. 1] FIG. 1 is a schematic diagram showing an embodiment of a liquefied-gas tank facility;
[FIG. 2] FIG. 2 is a diagram showing an embodiment of a pump system including a pump column, a submersible pump, and a power feeding apparatus;
[FIG. 3A] FIG. 3A is a view of a first electrical contact and a second electrical contact as viewed from a radial direction of the pump column;
[FIG. 3B] FIG. 3B is a view of the first electrical contact and the second electrical contact as viewed from the radial direction of the pump column;
[FIG. 4] FIG. 4 is a diagram illustrating an operation of carrying the submersible pump shown in FIG. 2 into the pump column;
[FIG. 5] FIG. 5 is a diagram showing another embodiment of a power feeding apparatus;
[FIG. 6] FIG. 6 is a diagram illustrating an operation of carrying the submersible pump shown in FIG. 5 into the pump column;
[FIG. 7] FIG. 7 is a cross-sectional view showing an embodiment in which three pairs of first electrical contacts and second electrical contacts are provided;
[FIG. 8] FIG. 8 is an enlarged view of an embodiment of a first contact assembly and a second contact assembly;
[FIG. 9] FIG. 9 is a diagram illustrating an embodiment of a pump system including the first contact assembly and the second contact assembly;
[FIG. 10] FIG. 10 is an enlarged view showing a first electrical contact of the first contact assembly when contacting a second electrical contact of the second contact assembly;
[FIG. 11] FIG. 11 is a cross-sectional view taken along line A-A of FIG. 9;
[FIG. 12] FIG. 12 is an enlarged view showing another embodiment of the first contact assembly and the second contact assembly;
[FIG. 13] FIG. 13 is an enlarged view showing a first electrical contact of the first contact assembly when contacting a second electrical contact of the second contact assembly;
[FIG. 14] FIG. 14 is a diagram showing an embodiment of a pump system including another embodiment of a power feeding apparatus;
[FIG. 15] FIG. 15 is a diagram explaining a process of removing the submersible pump from the pump column;
[FIG. 16] FIG. 16 is a diagram explaining a process of removing the submersible pump from the pump column;
[FIG. 17] FIG. 17 is a diagram explaining a process of removing the submersible pump from the pump column;
[FIG. 18] FIG. 18 is a diagram showing an embodiment of a pump system including still another embodiment of a power feeding apparatus;
[FIG. 19] FIG. 19 is an enlarged cross-sectional view of a side wall of the pump column shown in FIG. 18;
[FIG. 20] FIG. 20 is a horizontal cross-sectional view of the pump column shown in FIG. 18;
[FIG. 21] FIG. 21 is a diagram showing an embodiment of a pump system including still another embodiment of a power feeding apparatus;
[FIG. 22] FIG. 22 is a front view of an embodiment of a suspension structure shown in FIG. 21;
[FIG. 23] FIG. 23 is a cross-sectional view taken along line B-B of FIG. 21;
[FIG. 24] FIG. 24 is a cross-sectional view taken along line C-C of FIG. 21;
[FIG. 25] FIG. 25 is a diagram showing the suspension structure when removed from the pump column together with the second electrical contact;
[FIG. 26] FIG. 26 is a diagram showing an operation in which the first electrical contact secured to the submersible pump is brought into contact with the second electrical contact on the suspension structure;
[FIG. 27] FIG. 27 is a horizontal cross-sectional view showing a state in which a guide follower is engaged with a guide groove;
[FIG. 28] FIG. 28 is a diagram showing an embodiment of a pump system including still another embodiment of a power feeding apparatus;
[FIG. 29] FIG. 29 is a horizontal cross-sectional view of the pump system shown in FIG. 28;
[FIG. 30] FIG. 30 is a diagram showing an embodiment of a pump system including still another embodiment of a power feeding apparatus;
[FIG. 31] FIG. 31 is a horizontal cross-sectional view of the pump system shown in FIG. 30;
[FIG. 32] FIG. 32 is a diagram showing an embodiment of a pump system including still another embodiment of a power feeding apparatus;
[FIG. 33] FIG. 33 is a horizontal cross-sectional view of the pump system shown in FIG. 32;
[FIG. 34] FIG. 34 is a diagram showing an embodiment of a pump system including still another embodiment of a power feeding apparatus;
[FIG. 35] FIG. 35 is a horizontal cross-sectional view of the pump system shown in FIG. 33;
[FIG. 36] FIG. 36 is a diagram showing an operation in which a first electrical contact secured to a submersible pump is brought into contact with a second electrical contact on a suspension structure;
[FIG. 37] FIG. 37 is a schematic diagram showing a conventional example of a liquefied-gas storage tank in which liquefied gas is stored and a pump for pumping up the liquefied gas; and
[FIG. 38] FIG. 38 is a view for explaining an operation of carrying the pump shown in FIG. 37 into a pump column and an operation of pulling up the pump out of the pump column.

### Description of Embodiments

Hereinafter, embodiments of the present invention will be described with reference to the drawings.

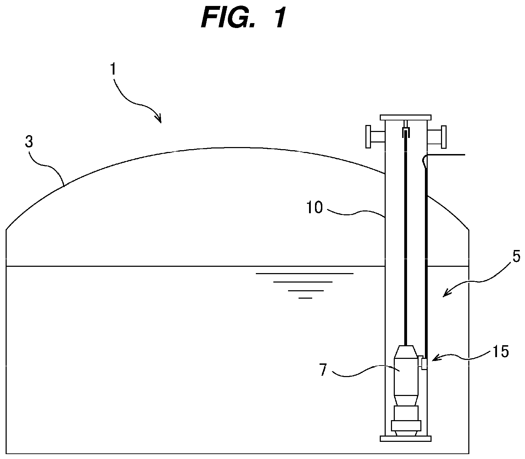

FIG. 1 is a schematic diagram showing an embodiment of a liquefied-gas tank facility. The liquefied-gas tank facility 1 includes a liquefied-gas storage tank 3 for storing liquefied gas therein and a pump system 5 for pumping up the liquefied gas in the liquefied-gas storage tank 3. Examples of liquefied gas include liquefied ammonia, liquid hydrogen, liquid nitrogen, liquefied natural gas, liquefied ethylene gas, liquefied petroleum gas, etc. The pump system 5 includes a submersible pump 7 for delivering the liquefied gas, a pump column 10 in which the submersible pump 7 is accommodated, and a power feeding apparatus 15 for supplying electric power to the submersible pump 7.

The pump column 10 is installed in the liquefied-gas storage tank 3 in which the liquefied gas is stored. The pump column 10 is a vertically extending hollow container, and its upper part protrudes upward from the liquefied-gas storage tank 3. The submersible pump 7 is installed on a bottom of the pump column 10. The pump column 10 may have a shape other than that shown in FIG. 1.

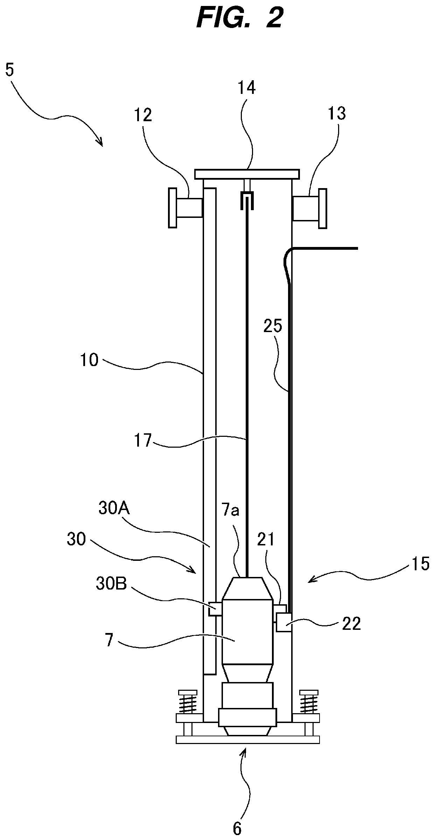

FIG. 2 is a diagram showing an embodiment of the pump system 5 including the pump column 10, the submersible pump 7, and the power feeding apparatus 15. A purge-gas introduction port 12 and a liquefied-gas discharge port 13 are provided at an upper portion of the pump column 10. An upper opening of the pump column 10 is closed by an upper lid 14. A suction valve 6 is provided at the bottom of the pump column 10. A structure of the suction valve 6 is not particularly limited. In the present embodiment, the suction valve 6 is of a type in which the suction valve 6 is opened by a weight of the submersible pump 7. In one embodiment, the suction valve 6 may be an actuator-driven valve (e.g., an electric valve). In one embodiment, the purge-gas introduction port 12 may not be provided.

The upper end of the submersible pump 7 is coupled to a suspension cable 17 suspended from the upper lid 14. Electric power is supplied to an electric motor 7a of the submersible pump 7 from a power supply source (not shown) via the power feeding apparatus 15. The submersible pump 7 is driven when the electric power is supplied via the power feeding apparatus 15 and pumps up the liquefied gas that has flowed into the pump column 10 through the suction valve 6. The liquefied gas pumped up by the submersible pump 7 is discharged from the pump column 10 through the liquefied-gas discharge port 13. The type of the electric motor 7a of the submersible pump 7 is not particularly limited. An AC motor (e.g., induction motor or synchronous motor) or a DC motor (e.g., brushless DC motor) is used.

The power feeding apparatus 15 includes a first electrical contact 21 electrically coupled to the electric motor 7a of the submersible pump 7, a second electrical contact 22 that contacts the first electrical contact 21, and a power cable 25 electrically coupled to the second electrical contact 22. The first electrical contact 21 is secured to the submersible pump 7, and the second electrical contact 22 is secured to the pump column 10. The first electrical contact 21 is secured to an outer surface of the submersible pump 7 and protrudes radially outward from the outer surface of the submersible pump 7. The second electrical contact 22 is located within the pump column 10 and is secured to an inner surface of the pump column 10. The second electrical contact 22 is located radially outwardly of the submersible pump 7. The first electrical contact 21 is movable together with the submersible pump 7, while the position of the second electrical contact 22 is fixed.

The first electrical contact 21 and the second electrical contact 22 are in contact with the liquefied gas, and the liquefied gas used in this embodiment has an electrical insulating property. Therefore, no leakage of electricity occurs through the first electrical contact 21 and the second electrical contact 22.

A part of the power cable 25 is arranged in the pump column 10, and other part of the power cable 25 is arranged outside the pump column 10. The power cable 25 extends through the side wall of the pump column 10, and a part of the power cable 25 is secured to the inner surface of the pump column 10. An end of the power cable 25 is located within the pump column 10 and is coupled to the second electrical contact 22. The power cable 25 has structural resistance to low temperatures below a boiling point of liquefied gas. More specifically, the power cable 25 is configured to maintain its flexible property under an extremely low temperature. Specific examples of the power cable 25 include a flexible twisted conductor, a power cable having a multi-layer structure of polyester resin tape, and a power cable having a stainless-steel braided structure with resistance to damage.

The power feeding apparatus 15 further includes a positioning mechanism 30 configured to determine relative positions of the first electrical contact 21 and the second electrical contact 22 in a circumferential direction of the submersible pump 7. The positioning mechanism 30 has a guide rail 30A secured to the inner surface of the pump column 10, and a guide follower 30B engaged with the guide rail 30A. The guide rail 30A extends in a longitudinal direction of the pump column 10 (i.e., in the vertical direction). The guide follower 30B protrudes radially outward from the outer surface of the submersible pump 7. The guide follower 30B may be configured to be removable from the submersible pump 7 or may be integrated with the submersible pump 7. The guide follower 30B has a shape that can allow the guide follower 30B to move in the longitudinal direction of the pump column 10 along the guide rail 30A while engaging with the guide rail 30A. Multiple positioning mechanisms 30 with multiple sets of guide rails 30A and guide followers 30B may be provided in order to achieve higher positioning accuracy.

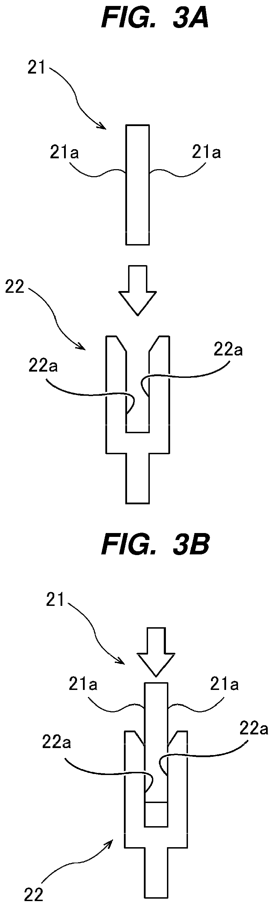

FIG. 3A is a diagram showing the first electrical contact 21 and the second electrical contact 22 as viewed from the radial direction of the pump column 10. The first electrical contact 21 has first contact surfaces 21a extending along the longitudinal direction of the pump column 10. Similarly, the second electrical contact 22 has second contact surfaces 22a extending along the longitudinal direction of the pump column 10. In this embodiment, the first electrical contact 21 has a flat plate shape, and the second electrical contact 22 has a clamp shape that sandwiches the first electrical contact 21. In one embodiment, the second electrical contact 22 may have a flat plate shape, and the first electrical contact 21 may have a clamp shape that sandwiches the second electrical contact 22.

As shown in FIG. 3B, the first electrical contact 21 can be moved toward the second electrical contact 22 until the first contact surfaces 21a contact the second contact surfaces 22a. The first contact surfaces 21a and the second contact surfaces 22a are parallel to each other and extend in the longitudinal direction of the pump column 10. Therefore, the first electrical contact 21 and the second electrical contact 22 can move relative to each other in the longitudinal direction of the pump column 10, while the first electrical contact 21 and the second electrical contact 22 are in contact with each other.

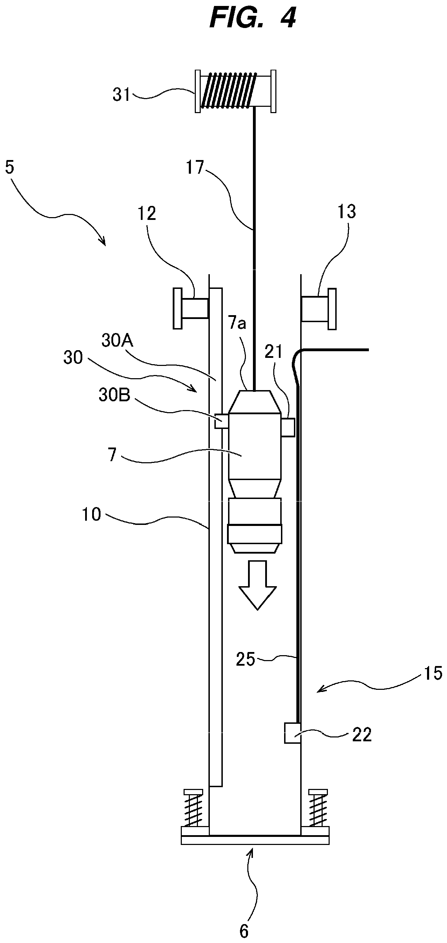

FIG. 4 is a diagram for explaining an operation of carrying the submersible pump 7 shown in FIG. 2 into the pump column 10. As shown in FIG. 4, the submersible pump 7 is lowered in the pump column 10 by an elevating device 31 coupled to the suspension cable 17 while the guide follower 30B is engaged with the guide rail 30A. The elevating device 31 has a hoist, a winch, or the like. A purge gas (for example, an inert gas, such as nitrogen gas or helium gas) is supplied into the pump column 10 through the purge-gas introduction port 12 in order to prevent ambient air from entering the pump column 10.

The first electrical contact 21 is lowered together with the submersible pump 7. The circumferential position of the submersible pump 7 in the pump column 10 is fixed by the guide rail 30A and the guide follower 30B that constitute the positioning mechanism 30. Therefore, the first electrical contact 21 can contact the second electrical contact 22 when the submersible pump 7 is lowered in the pump column 10. The first electrical contact 21 contacts the second electrical contact 22 when the submersible pump 7 is lowered to an operating position in the pump column 10 (a position of the submersible pump 7 shown in FIG. 2). Aa a result, the electrical connection between the first electrical contact 21 and the second electrical contact 22 is established (see FIG. 2). Electric power is supplied from the power cable 25 to the electric motor 7a of the submersible pump 7 via the second electrical contact 22 and the first electrical contact 21, thereby operating the submersible pump 7.

When the submersible pump 7 is carried out of the pump column 10 for repair or maintenance, the submersible pump 7 is elevated in the pump column 10 by the elevating device 31 coupled to the suspension cable 17 in the same manner as in FIG. 4. The first electrical contact 21 is separated from the second electrical contact 22 when the submersible pump 7 is elevated from the operating position by the elevating device 31.

Thus, according to the present embodiment, the electrical connection is established between the first electrical contact 21 and the second electrical contact 22 when the first electrical contact 21 and the second electrical contact 22 are in contact with each other. Since the first electrical contact 21 can be separated from the second electrical contact 22, the power cable 25 and the second electrical contact 22 can be permanently mounted to the pump column 10. Therefore, when the pump 7 is carried into the pump column 10 and when the pump 7 is carried out from the pump column 10, it is not necessary to carry the power cable 25 into and out of the pump column 10 together with the pump 7.

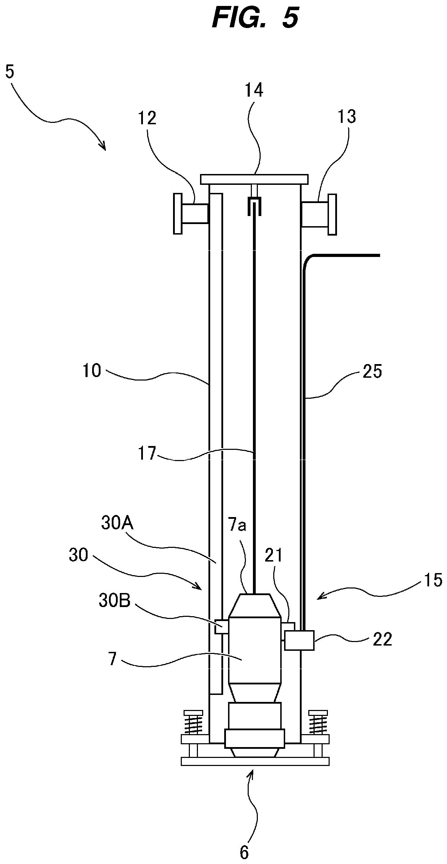

FIG. 5 is a diagram showing another embodiment of the power feeding apparatus 15. Configurations and operations of this embodiment, which will not be specifically described, are the same as those of the embodiments described with reference to FIGS. 1 to 4, and redundant descriptions thereof are omitted. As shown in FIG. 5, in this embodiment, a part of the second electrical contact 22 is arranged outside the pump column 10, and the entire power cable 25 is arranged outside the pump column 10. The power cable 25 is secured to the outer surface of the pump column 10. The second electrical contact 22 extends through the sidewall of the pump column 10. Accordingly, the second electrical contact 22 has an outer portion located outside the pump column 10 and an inner portion located within the pump column 10. The end of the power cable 25 is coupled to the outer portion of the second electrical contact 22. The inner portion of the second electrical contact 22 has the second contact surfaces 22a described with reference to FIGS. 3A and 3B.

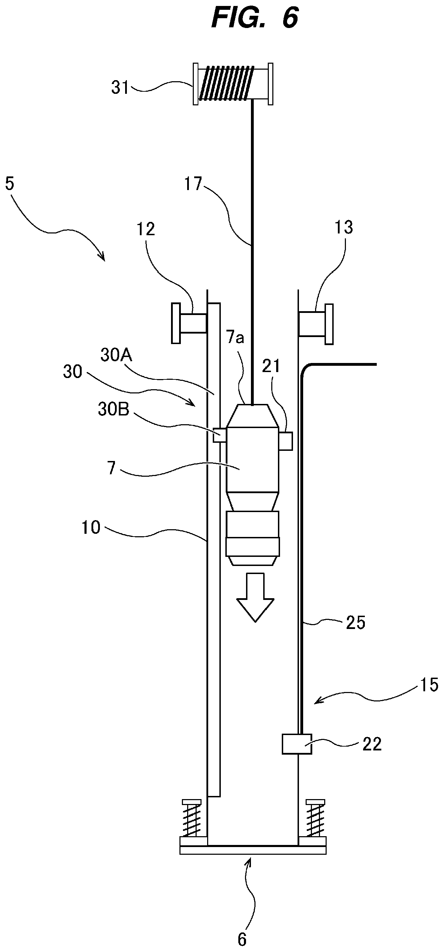

FIG. 6 is a diagram illustrating an operation in which the submersible pump 7 shown in FIG. 5 is installed in the pump column 10. As shown in FIG. 6, the submersible pump 7 is lowered in the pump column 10 by the elevating device 31 coupled to the suspension cable 17 while the guide follower 30B is engaged with the guide rail 30A. A purge gas (for example, an inert gas, such as nitrogen gas or helium gas) is supplied into the pump column 10 through the purge-gas introduction port 12 in order to prevent ambient air from entering the pump column 10.

The first electrical contact 21 is lowered together with the submersible pump 7. The circumferential position of the submersible pump 7 in the pump column 10 is fixed by the guide rail 30A and the guide follower 30B that constitute the positioning mechanism 30. Therefore, the first electrical contact 21 can contact the second electrical contact 22. The first electrical contact 21 contacts the second electrical contact 22 when the submersible pump 7 is lowered to an operating position in the pump column 10 (a position of the submersible pump 7 shown in FIG. 5). Aa a result, the electrical connection between the first electrical contact 21 and the second electrical contact 22 is established (see FIG. 5). Electric power is supplied from the power cable 25 to the electric motor 7a of the submersible pump 7 via the second electrical contact 22 and the first electrical contact 21, thereby operating the submersible pump 7.

When the submersible pump 7 is carried out of the pump column 10 for repair or maintenance, the submersible pump 7 is elevated in the pump column 10 by the elevating device 31 coupled to the suspension cable 17 in the same manner as in FIG. 6. The first electrical contact 21 is separated from the second electrical contact 22 when the submersible pump 7 is elevated from the operating position by the elevating device 31.

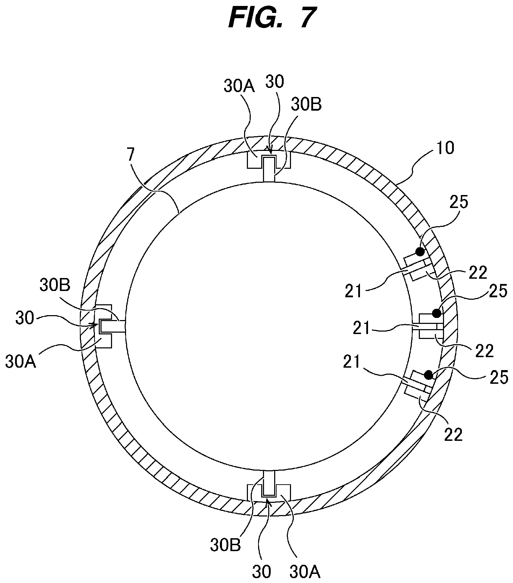

In FIGS. 1 to 6, one pair of the first electrical contact 21 and the second electrical contact 22 is depicted. The electric motor 7a of the submersible pump 7 may be configured to be driven by three-phase AC power. In that case, three pairs of first electrical contacts 21 and second electrical contacts 22 are provided, as shown in FIG. 7. A plurality of positioning mechanisms 30, each having a guide rail 30A and a guide follower 30B, may be provided. Four or more positioning mechanisms 30 may be provided in order to increase the accuracy of determining the relative positions of the first electrical contact 21 and the second electrical contact 22 in the circumferential direction of the submersible pump 7.

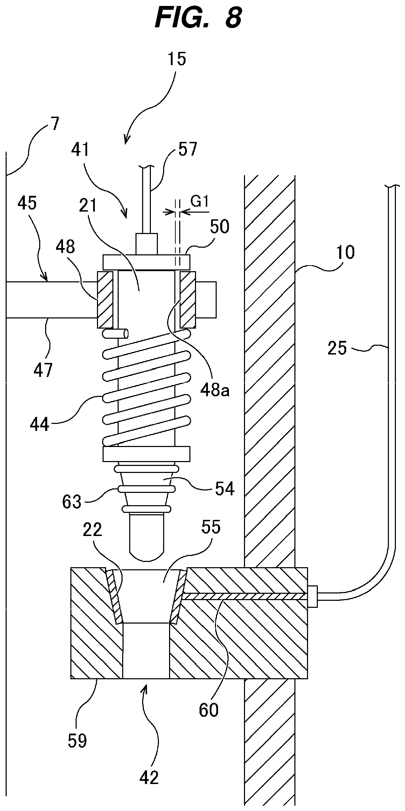

Next, still another embodiment of the power feeding apparatus 15 will be described with reference to FIGS. 8 to 11. Configurations and operations of this embodiment, which will not be specifically described, are the same as those of the embodiments described with reference to FIGS. 1 to 7, and redundant descriptions thereof are omitted.

The power feeding apparatus 15 includes a first contact assembly 41 secured to the submersible pump 7 and a second contact assembly 42 secured to the pump column 10. The first contact assembly 41 includes a first electrical contact 21, a spring 44 configured to press the first electrical contact 21 against a second electrical contact 22, and a support structure 45 configured to movably support the first electrical contact 21. The support structure 45 is secured to the submersible pump 7. More specifically, the support structure 45 has a base bracket 47 secured to the submersible pump 7 and an insulator 48 held by the base bracket 47. The insulator 48 has a through-hole 48a through which the first electrical contact 21 extends. The first electrical contact 21 has a flange 50 at its upper end which prevents the first electrical contact 21 from falling off the insulator 48.

The first electrical contact 21 has a shape extending in the vertical direction, and its distal end (or lower end) is composed of a tapered surface 54. The tapered surface 54 has a truncated-cone shape. The tapered surface 54 may have other shape, such as a truncated pyramid. The first electrical contact 21 is electrically coupled to a lead wire 57, which is coupled to the electric motor 7a. There is a horizontal gap G1 between the first electrical contact 21 and the support structure 45. In this embodiment, the first electrical contact 21 is inserted into the through-hole 48a of the insulator 48. Therefore, the horizontal gap G1 is formed between an inner surface forming the through-hole 48a and an outer surface of the first electrical contact 21.

The second contact assembly 42 includes the second electrical contact 22 and an electrical-contact holder 59 holding the second electrical contact 22. The second electrical contact 22 has a reverse tapered surface 55 shaped to conform to the tapered surface 54 of the first electrical contact 21. The electrical-contact holder 59 is secured to the pump column 10 and extends from the pump column 10 toward the submersible pump 7. The second electrical contact 22 is electrically coupled to the power cable 25 via a conductor 60 located within the electrical-contact holder 59. The power cable 25 is arranged outside the pump column 10.

In this embodiment, in order to improve the electrical connection between the first electrical contact 21 and the second electrical contact 22, the first electrical contact 21 may have a multi-contact 63 mounted to the tapered surface 54. The multi-contact 63 is composed of an elastic conductive structure and can ensure the electrical connection between the first electrical contact 21 and the second electrical contact 22. Such multi-contact 63 is commercially available. Both ends of the spring 44 are in contact with the first electrical contact 21 and the support structure 45, so that the spring 44 biases or pushes the first electrical contact 21 toward the second electrical contact 22. Moreover, the presence of the spring 44 can eliminate a need for precise vertical positioning of the base bracket 47 secured to the submersible pump 7 and the electrical-contact holder 59 secured to the pump column 10.

One pair of first contact assembly 41 and second contact assembly 42 is depicted in FIG. 8. The electric motor 7a of the submersible pump 7 may be configured to be driven by three-phase AC power. In that case, three pairs of first contact assemblies 41 and second contact assemblies 42 are provided. Similarly, three power cables 25 coupled to the three second contact assemblies 42 are provided.

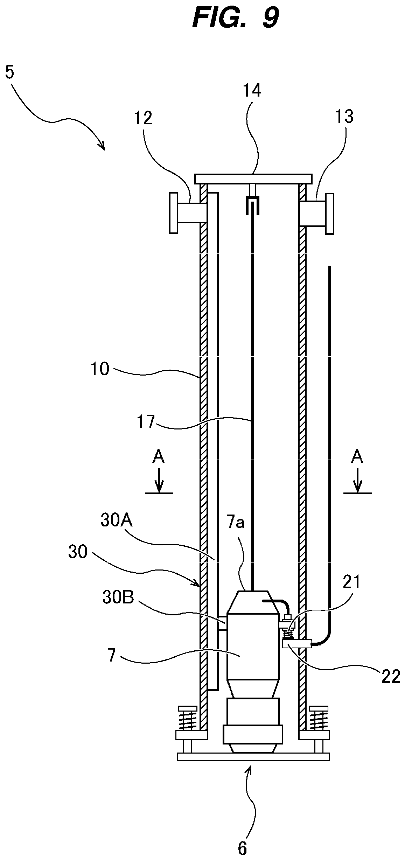

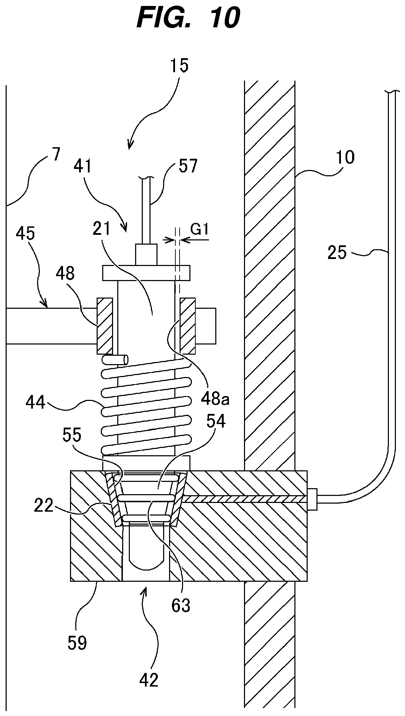

As shown in FIG. 9, the first electrical contact 21 makes electrical contact with the second electrical contact 22 when the submersible pump 7 is lowered to a predetermined operating position in the pump column 10. More specifically, as shown in FIG. 10, the tapered surface 54 of the first electrical contact 21 electrically contacts the reverse tapered surface 55 of the second electrical contact 22. In this embodiment, the tapered surface 54 of the first electrical contact 21 electrically contacts the reverse tapered surface 55 of the second electrical contact 22 via the multi-contact 63. In one embodiment, the multi-contact 63 may not be provided.

Since the tapered surface 54 of the first electrical contact 21 is pressed against the reverse tapered surface 55 of the second electrical contact 22 by the spring 44, the contact between the first electrical contact 21 and the second electrical contact 22 is ensured. Moreover, even when the submersible pump 7 is shaken in the vertical direction, the spring 44 can maintain the contact between the first electrical contact 21 and the second electrical contact 22.

As shown in FIG. 10, there is the horizontal gap G1 between the first electrical contact 21 and the support structure 45 when the first electrical contact 21 and the second electrical contact 22 are in electrical contact. This gap G 1 allows the support structure 45 to move relative to the first electrical contact 21. The reason for providing this gap G1 is as follows. When the submersible pump 7 shakes at the start of the submersible pump 7 or when an earthquake occurs, an excessive load may be applied to the first electrical contact 21 and the second electrical contact 22 that are in contact with each other. As a result, the first electrical contact 21 and/or the second electrical contact 22 may be destroyed. The gap G 1 between the first electrical contact 21 and the support structure 45 allows the submersible pump 7 to move relative to the pump column 10. Therefore, the excessive load on the first electrical contact 21 and the second electrical contact 22 caused by the shaking of the submersible pump 7 is reduced.

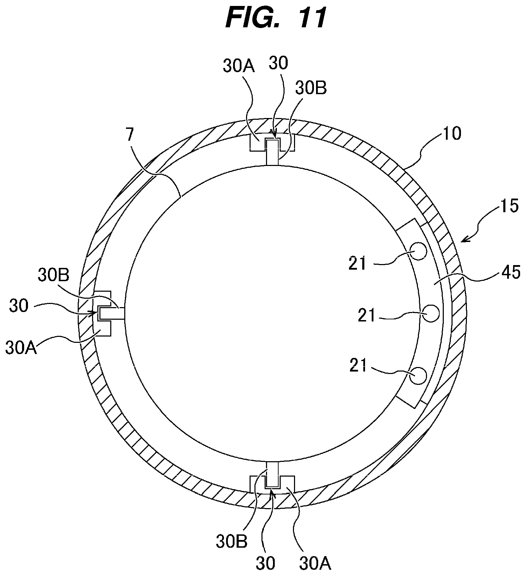

FIG. 11 is a cross-sectional view taken along line A-A of FIG. 9. In this embodiment, the gap G1 (see FIG. 10) between the first electrical contact 21 and the support structure 45 is larger than a horizontal gap between the guide rail 30A and the guide follower 30B that constitute each positioning mechanism 30. Therefore, the load caused by the shaking of the submersible pump 7 is received by the guide rail 30A and the guide follower 30B, and is not applied to the first electrical contact 21 and the second electrical contact 22. As a result, an excessive load on the first electrical contact 21 and the second electrical contact 22 due to shaking of the submersible pump 7 is substantially prevented.

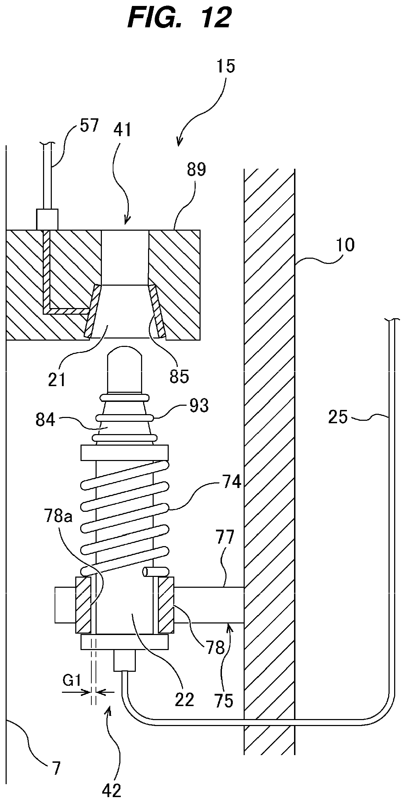

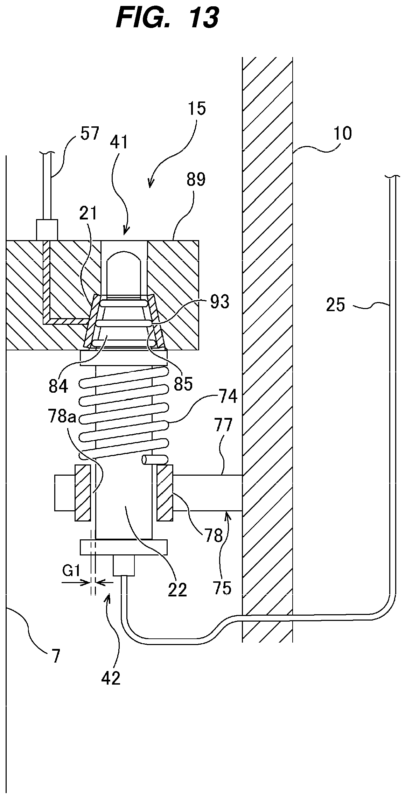

Next, still another embodiment of the power feeding apparatus 15 will be described with reference to FIGS. 12 and 13. Configurations and operations of this embodiment, which will not be specifically described, are the same as those of the embodiments described with reference to FIGS. 8 to 11, and redundant descriptions thereof are omitted. As shown in FIG. 12, the power feeding apparatus 15 includes a first contact assembly 41 secured to the submersible pump 7 and a second contact assembly 42 secured to the pump column 10.

The second contact assembly 42 includes a second electrical contact 22, a spring 74 configured to press the second electrical contact 22 against a first electrical contact 21, and a support structure 75 configured to movably support the second electrical contact 22. The support structure 75 is secured to the pump column 10. More specifically, the support structure 75 has a base bracket 77 secured to the pump column 10 and an insulator 78 held by the base bracket 77. The insulator 78 has a through-hole 78a through which the second electrical contact 22 extends.

The second electrical contact 22 has a shape extending in the vertical direction, and its distal end (or upper end) is composed of a tapered surface 84. The tapered surface 84 has a truncated-cone shape. The tapered surface 84 may have other shape, such as a truncated pyramid. The second electrical contact 22 is electrically coupled to the power cable 25. There is a horizontal gap G1 between the second electrical contact 22 and the support structure 75. In this embodiment, the second electrical contact 22 is inserted into the through-hole 78a of the insulator 78. Therefore, the horizontal gap G1 is formed between an inner surface forming the through-hole 78a and an outer surface of the second electrical contact 22.

The first contact assembly 41 includes the first electrical contact 21 and an electrical-contact holder 89 holding the first electrical contact 21. The first electrical contact 21 has a reverse tapered surface 85 shaped to conform to the tapered surface 84 of the second electrical contact 22. The electrical-contact holder 89 is secured to the submersible pump 7 and extends from the submersible pump 7 toward the pump column 10. The first electrical contact 21 is electrically coupled to a lead wire 57, which is coupled to the electric motor 7a.

In this embodiment, in order to improve the electrical connection between the second electrical contact 22 and the first electrical contact 21, the second electrical contact 22 may have a multi-contact 93 mounted to its tapered surface 84. The multi-contact 93 is composed of an elastic conductive structure and can ensure the electrical connection between the second electrical contact 22 and the first electrical contact 21. Both ends of spring 74 contact the second electrical contact 22 and the support structure 75, so that the spring 74 biases or pushes the second electrical contact 22 toward the first electrical contact 21. Moreover, the presence of the spring 74 can eliminate a need for precise vertical positioning of the electrical-contact holder 89 secured to the submersible pump 7 and the base bracket 77 secured to the pump column 10.

As shown in FIG. 13, when the submersible pump 7 is lowered to a predetermined operating position within the pump column 10, the first electrical contact 21 makes electrical contact with the second electrical contact 22. More specifically, the reverse tapered surface 85 of the first electrical contact 21 electrically contacts the tapered surface 84 of the second electrical contact 22. In this embodiment, the reverse tapered surface 85 of the first electrical contact 21 electrically contacts the tapered surface 84 of the second electrical contact 22 via the multi-contact 93. In one embodiment, the multiple contact 93 may not be provided.

Since the tapered surface 84 of the second electrical contact 22 is pressed against the reverse tapered surface 85 of the first electrical contact 21 by the spring 74, the contact between the first electrical contact 21 and the second electrical contact 22 is ensured. Moreover, even when the submersible pump 7 is shaken in the vertical direction, the spring 74 can maintain the contact between the first electrical contact 21 and the second electrical contact 22.

As shown in FIG. 13, there is the horizontal gap G1 between the second electrical contact 22 and the support structure 75 when the first electrical contact 21 and the second electrical contact 22 are in electrical contact. This gap G1 allows the first electrical contact 21 and the second electrical contact 22 to move relative to the support structure 75, i.e., allows the submersible pump 7 to move relative to the pump column 10. Therefore, an excessive load on the first electrical contact 21 and the second electrical contact 22 due to shaking of the submersible pump 7 can be reduced.

In this embodiment, the gap G1 between the second electrical contact 22 and the support structure 75 is larger than a horizontal gap between the guide rail 30A and the guide follower 30B that constitute each positioning mechanism 30 shown in FIG. 11. Therefore, a load caused by the shaking of the submersible pump 7 is received by the guide rail 30A and the guide follower 30B, and is not applied to the first electrical contact 21 and the second electrical contact 22. As a result, an excessive load on the first electrical contact 21 and the second electrical contact 22 due to shaking of the submersible pump 7 is substantially prevented.

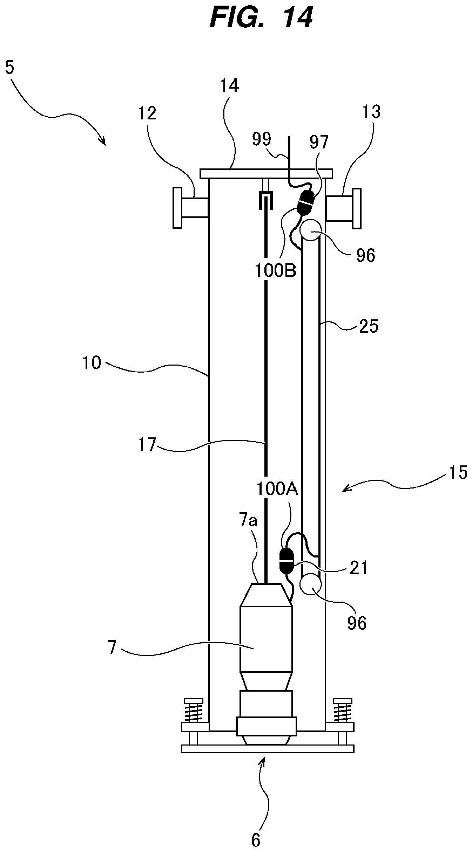

Still another embodiment of the power feeding apparatus 15 will be described with reference to FIGS. 14 to 17. Configurations and operations of this embodiment, which will not be specifically described, are the same as those of the embodiments described with reference to FIGS. 1 to 7, and redundant descriptions thereof are omitted.

The power feeding apparatus 15 further includes a plurality of pulleys 96, a power feeding connector 97 arranged in the pump column 10, and a power feeding line 99 electrically coupled to the power feeding connector 97. The power feeding line 99 extends from the outside to the inside of the pump column 10. The power feeding line 99 extends through the lid 14. In one embodiment, the power feeding line 99 may extend through the sidewall of the pump column 10.

The power cable 25 is an endless power cable (hereinafter referred to as endless power cable 25). The endless power cable 25 is movably supported by the pulleys 96. The second electrical contact 22 has a plurality of electrical connectors 100A, 100B coupled to the endless power cable 25. In this embodiment, two electrical connectors 100A and 100B are coupled to the endless power cable 25. These electrical connectors 100A and 100B are movable together with the endless power cable 25. In one embodiment, three or more electrical connectors may be coupled to the endless power cable 25.

The entirety of the endless power cable 25 and the plurality of electrical connectors 100A, 100B are arranged within the pump column 10. The electrical connector 100A, which is one of the electrical connectors 100A, 100B, is detachably coupled to the first electrical contact 21. The first electrical contact 21 is an electrical connector that can be electrically coupled to each of the electrical connectors 100A, 100B. The other electrical connector 100B of the electrical connectors 100A and 100B is detachably coupled to the power feeding connector 97.

Electric power is supplied to the electric motor 7a of the submersible pump 7 via the power feeding line 99, the power feeding connector 97, the electrical connector 100B, the power cable 25, the electrical connector 100A, and the first electrical contact 21.

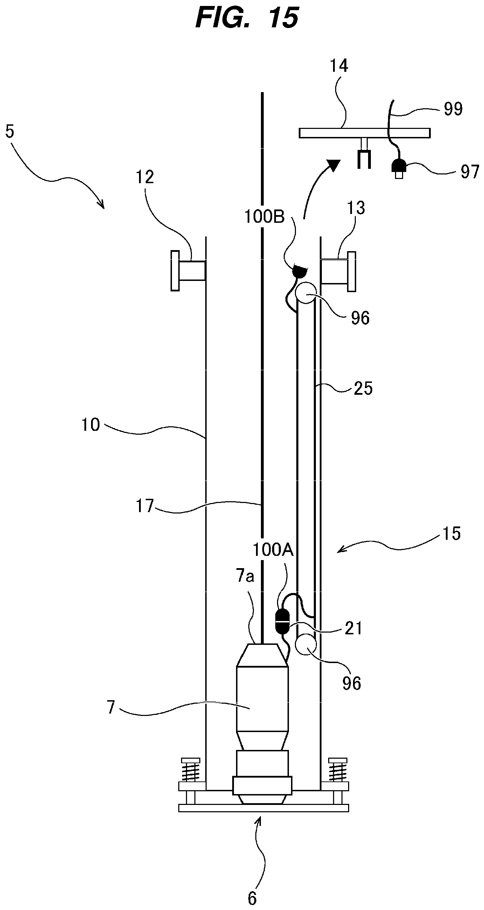

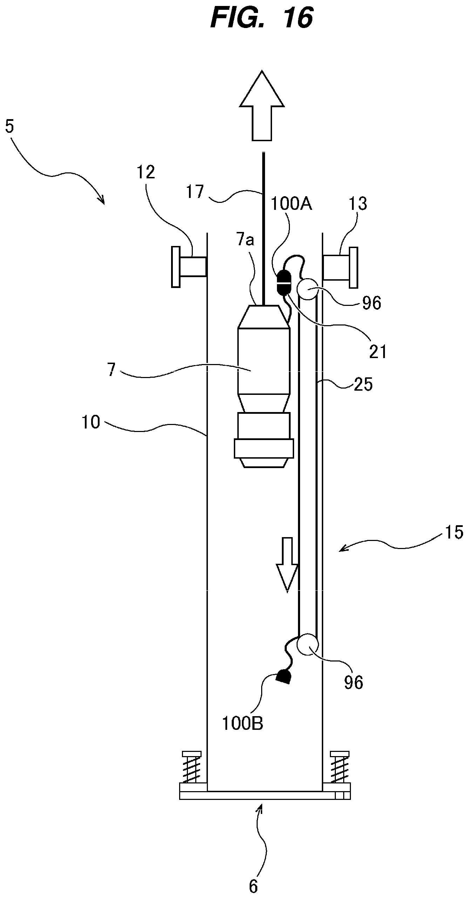

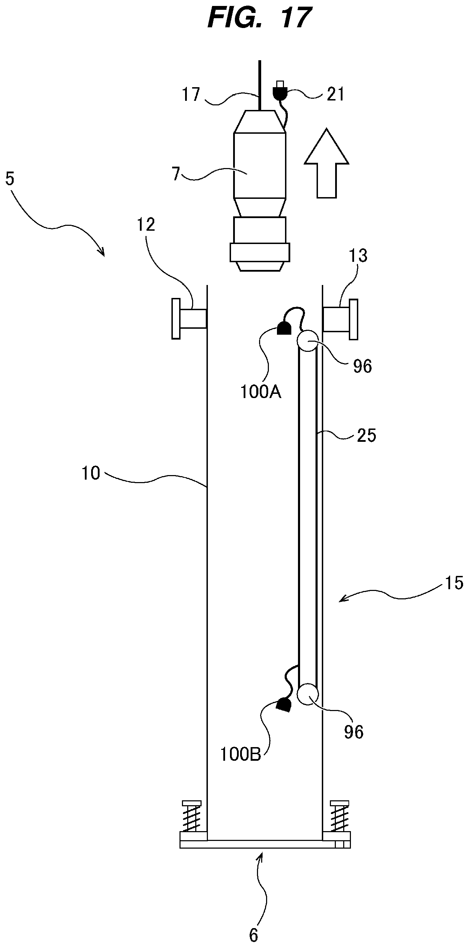

When the submersible pump 7 is to be removed from the pump column 10, as shown in FIG. 15, a worker removes the upper cover 14 and disconnects the power feeding connector 97 from the upper electric connector 100B. Next, as shown in FIG. 16, the submersible pump 7 is elevated in the pump column 10 by the elevating device (see the reference numeral 31 in FIG. 4), until the lower electrical connector 100A and the first electrical contact 21 are located near the upper opening of the pump column 10. As the submersible pump 7, the electrical connector 100A, and the first electrical contact 21 are elevated, the electrical connector 100B moves downward. As shown in FIG. 17, the worker disconnects the first electrical contact 21 from the lower electrical connector 100A. Then, the submersible pump 7 is removed from the pump column 10 by the elevating device.

When the submersible pump 7 is to be carried into the pump column 10, the above steps are performed in reverse order. Specifically, the submersible pump 7 is lowered by the elevating device (see the reference numeral 31 in FIG. 4), until the submersible pump 7 and the first electrical contact 21 are located near the upper opening of the pump column 10. A worker connects the electrical connector 100A to the first electrical contact 21. Next, the submersible pump 7 is lowered in the pump column 10 by the elevating device, until the submersible pump 7 is placed at a predetermined operating position, while the electrical connector 100B is elevated to a position near the upper opening of the pump column 10. The worker connects the electrical connector 100B to the power feeding connector 97, so that the submersible pump 7, the power cable 25, and the power feeding line 99 are electrically connected.

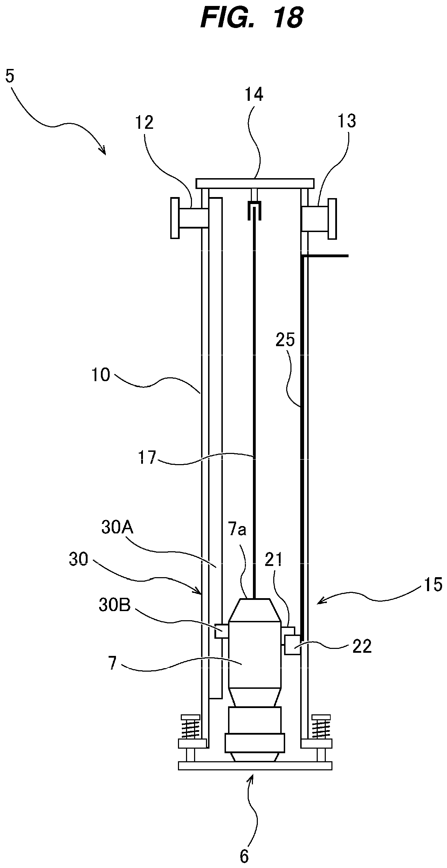

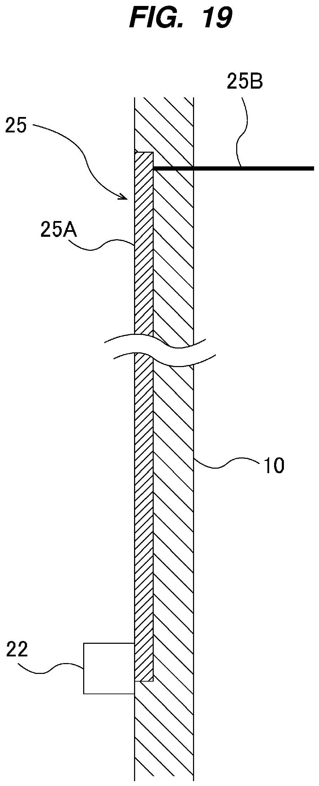

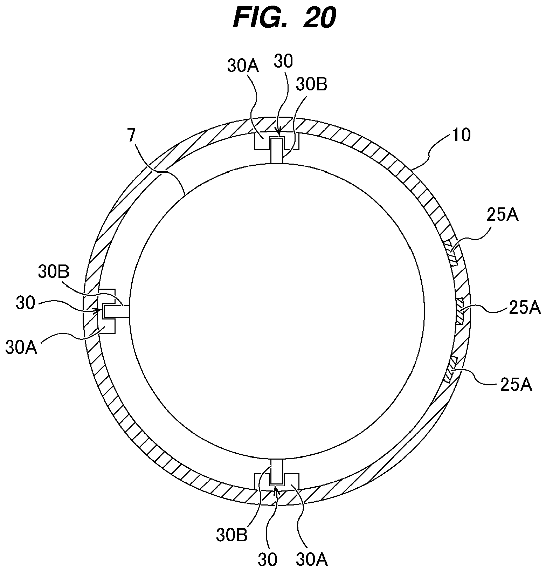

Still another embodiment of the power feeding apparatus 15 will be described with reference to FIGS. 18 to 20. Configurations and operations of this embodiment, which will not be specifically described, are the same as those of the embodiments described with reference to FIGS. 1 to 7, and redundant descriptions thereof are omitted. FIG. 18 is a diagram showing a pump system including still another embodiment of the power feeding apparatus 15, FIG. 19 is an enlarged cross-sectional view of the side wall of the pump column 10 shown in FIG. 18, and FIG. 20 is a horizontal cross-sectional view of the pump column 10 shown in FIG. 18.

As shown in FIG. 18, a part of each power cable 25 located within the pump column 10 is embedded in the inner surface of the pump column 10. More specifically, as shown in FIGS. 19 and 20, each power cable 25 includes a metal interconnect 25A embedded in the inner surface of the pump column 10, and a power feeding line 25B electrically coupled to the metal interconnect 25A. The metal interconnect 25A is embedded in an interconnect trench (not shown) formed in the inner surface of the pump column 10. The metal interconnect 25A and the interconnect trench extend in the vertical direction along the pump column 10. A lower end of the metal interconnect 25A is coupled to the second electrical contact 22. An upper end of the metal interconnect 25A is coupled to the power feeding line 25B. The power feeding line 25B extends from the inside to the outside of the pump column 10 and is electrically coupled to a power supply source (not shown).

According to the present embodiment, the metal interconnect 25A extending inside the pump column 10 is embedded in the pump column 10. This configuration can prevent a possible damage to the cable 25 due to sliding contact between the power cable 25 and the pump column 10 or between the power cable 25 and the submersible pump 7.

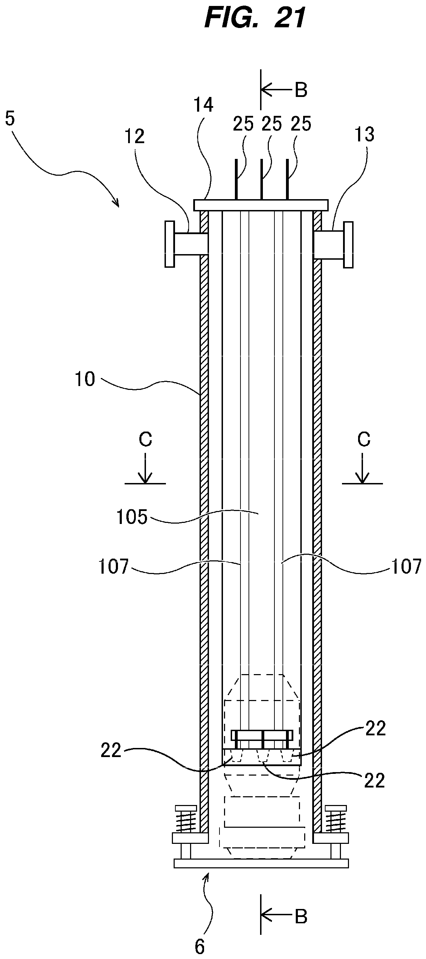

Still another embodiment of the power feeding apparatus 15 will be described with reference to FIGS. 21 to 27. Configurations and operations of this embodiment, which will not be specifically described, are the same as those of the embodiments described with reference to FIGS. 1 to 7, and redundant descriptions thereof are omitted. FIG. 21 is a diagram showing a pump system including still another embodiment of the power feeding apparatus 15. In FIG. 21, the submersible pump 7 is depicted with a dotted line for explanation of the power feeding apparatus 15.

As shown in FIG. 21, the power feeding apparatus 15 includes a suspension structure 105 removably arranged in the pump column 10. The suspension structure 105 extends in the vertical direction along the inner surface of the pump column 10 and extends from the upper portion to the lower portion of the pump column 10. The suspension structure 105 is suspended from the upper portion of the pump column 10. In one embodiment, the suspension structure 105 may be suspended from the upper lid 14. Second electrical contacts 22 are held on the suspension structure 105. The suspension structure 105 has a plurality of guide grooves 107 with which a plurality of guide followers (described later) provided on the submersible pump 7 are engaged.

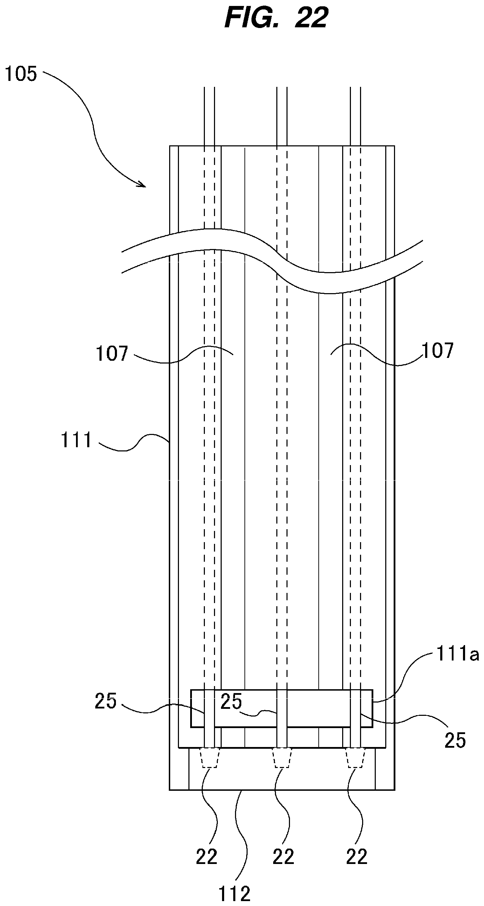

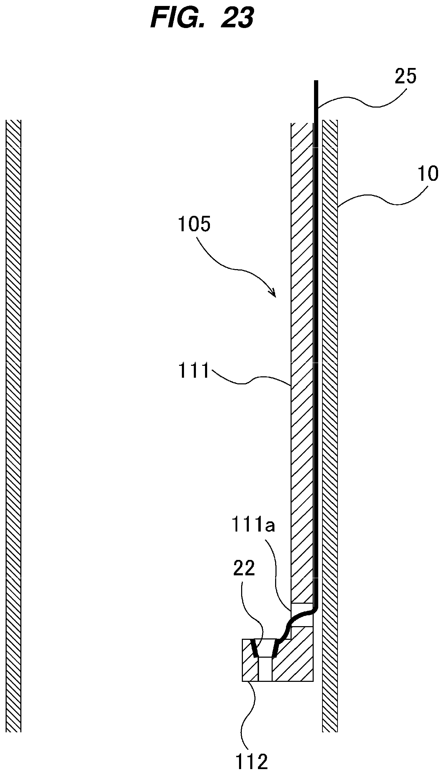

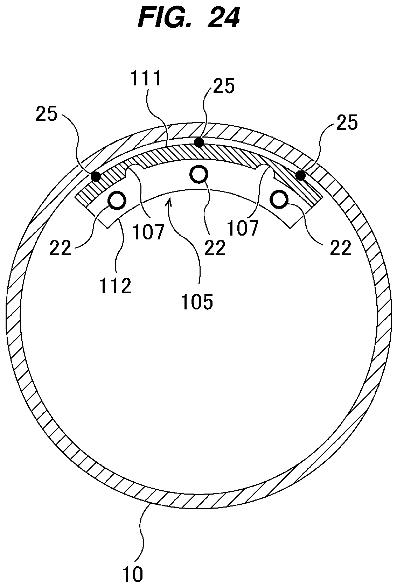

FIG. 22 is a front view showing an embodiment of the suspension structure 105 shown in FIG. 21, FIG. 23 is a cross-sectional view taken along line B-B of FIG. 21, and FIG. 24 is a cross-sectional view taken along line C-C of FIG. 21. The suspension structure 105 has a vertically-extending structure 111 extending in the vertical direction along the pump column 10, and an electrical-contact holder 112 protruding inwardly in the radial direction of the pump column 10 from a bottom of the vertically-extending structure 111. The second electrical contacts 22 are held by the electrical-contact holder 112.

The vertically-extending structure 111 and the electrical-contact holder 112 of this embodiment have an arcuate horizontal cross-sectional shape. In one embodiment, the vertically-extending structure 111 and the electrical-contact holder 112 may have other horizontal cross-sectional shape. The vertically-extending structure 111 may be divided along the vertical direction into a plurality of split elements. The split elements are detachably coupled to each other by coupling devices, such as combinations of bolts and nuts.

The power cables 25 extend through a gap between a back side of the suspension structure 105 and the inner surface of the pump column 10. Furthermore, the power cables 25 extend upward through the upper lid 14 as shown in FIG. 21. In one embodiment, as discussed with reference to FIGS. 18 to 20, a part of each power cable 25 may be a metal interconnect embedded in the back side of suspension structure 105.

The vertically-extending structure 111 has a through-hole 111a in its lower portion. The power cables 25 extend from the back side to the front side of the suspension structure 105 through the through-hole 111a and are coupled to the second electrical contacts 22, respectively. The vertically-extending structure 111 has the guide grooves 107 with which the guide followers (described later) provided on the submersible pump 7 are engaged. These guide grooves 107 extend parallel to the vertical direction and are formed in the inner surface of the vertically-extending structure 111. The second electrical contacts 22 may have the same configuration as the second electrical contact 22 described with reference to FIGS. 8 to 11.

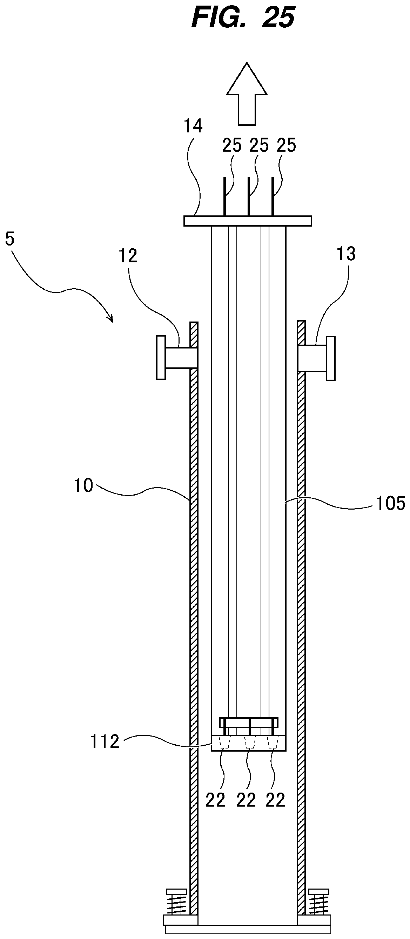

As shown in FIG. 25, after the submersible pump 7 is removed from the pump column 10, the suspension structure 105, together with the second electrical contacts 22, can be removed from the pump column 10. Therefore, maintenance, such as cleaning or repairing or replacing the second electrical contacts 22, can be performed.

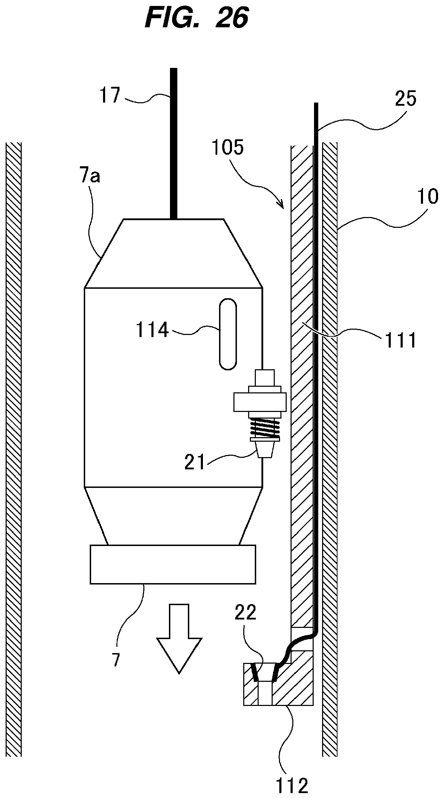

After the maintenance of the second electrical contacts 22, the suspension structure 105 is placed inside the pump column 10. Furthermore, as shown in FIG. 26, the submersible pump 7 is lowered in the pump column 10, until first electrical contacts 21 secured to the submersible pump 7 are brought into contact with the second electrical contacts 22 on the suspension structure 105. As a result, the electrical connection between the electric motor 7a of the submersible pump 7 and the power cables 25 is established. The first electrical contacts 21 may have the same configuration as the first electrical contact 21 discussed with reference to FIGS. 8 to 11.

As shown in FIG. 26, the submersible pump 7 has guide followers 114 that engage with the guide grooves 107 (see FIGS. 21 and 24) formed in the inner surface of the suspension structure 105. Although only one guide follower 114 is depicted in FIG. 26, the plurality of guide followers 114 are provided so as to correspond to the plurality of guide grooves 107. These guide followers 114 protrude from the side surface of the submersible pump 7.

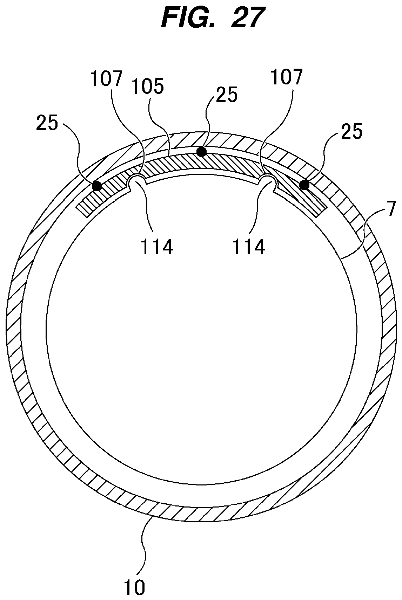

As shown in FIG. 27, the guide followers 114 engage the guide grooves 107, respectively, to achieve relative positioning of the submersible pump 7 with respect to the suspension structure 105 and the second electrical contacts 22. In one embodiment, instead of the guide grooves 107, a guide rail may be provided on the inner surface of the suspension structure 105 (more specifically, on the inner surface of the vertically-extending structure 111). An example of specific configuration of the guide rail is the guide rail 30A shown in FIG. 11. A guide follower 114 engages the guide rail to achieve relative positioning of the submersible pump 7 with respect to the suspension structure 105 and the second electrical contacts 22.

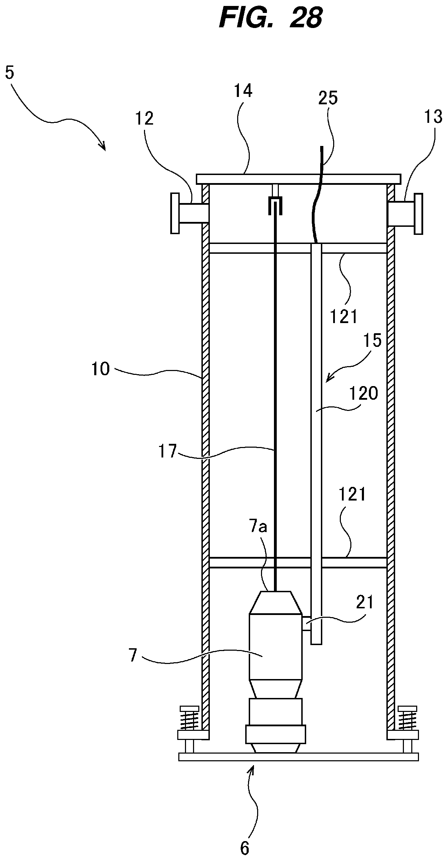

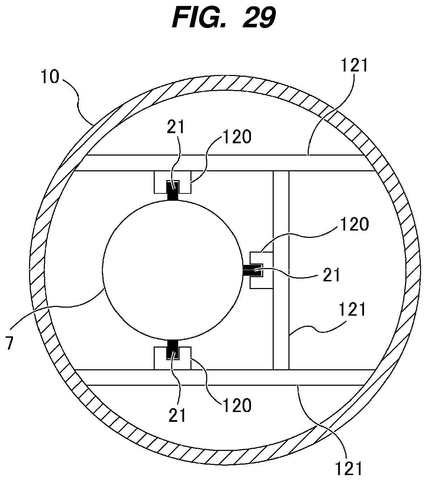

Still another embodiment of the power feeding apparatus 15 will be described with reference to FIGS. 28 and 29. Configurations and operations of this embodiment, which will not be specifically described, are the same as those of the embodiments described with reference to FIGS. 1 to 7, and redundant descriptions thereof are omitted. FIG. 28 is a diagram showing an embodiment of a pump system including still another embodiment of the power feeding apparatus 15, and FIG. 29 is a horizontal cross-sectional view of the pump system shown in FIG. 28.

In FIG. 28, the submersible pump 7 is elevated and lowered along electrode rails 120 as a second electrical contact fixedly arranged in the pump column 10. Tops of the electrode rails 120 are supported by beams 121 extending across the pump column 10, and each electrode rail 120 extends in the vertical direction from the upper portion toward the bottom of the pump column 10. The electrode rails 120 are made of conductive material and are coupled to the power cables 25. The electrode rails 120 are electrically coupled, via the power cables 25, to a power supply source (not shown) which is provided outside the pump column 10.

The first electrical contacts 21 of the submersible pump 7 that contact the electrode rails 120 are composed of electrical conductor. When the submersible pump 7 is installed on the bottom of the pump column 10, the first electrical contacts 21 and the electrode rails 120, which are the second electrical contacts, are electrically connected. A part of each electrode rail 120 other than a lower part thereof may be covered with an insulating material. The first electrical contacts 21 are configured to be movable on the electrode rails 120 while engaging the electrode rails 120 serving as the second electrical contacts.

As shown in FIG. 29, the engagement between the first electrical contacts 21 and the electrode rails 120, which are the second electrical contacts, can prevent the submersible pump 7 from rotating or shaking when the submersible pump 7 is elevated and lowered. The submersible pump 7 can be accurately installed at an operating position, and reliable power supply is ensured. In addition, it is no longer necessary to move the submersible pump 7 up and down with power cables coupled to the submersible pump 7, thus eliminating a need for a take-up device for the power cables. The first electrical contacts 21 coupled to the submersible pump 7 are pressed against the electrode rails 120 by springs or the like (not shown). In case the first electrical contact 21 is worn, the first electrical contact 21 can be replaced with new one. That is, it is not necessary for a worker to move to the bottom of the pump column 10 for maintenance of the first electrical contact 21.

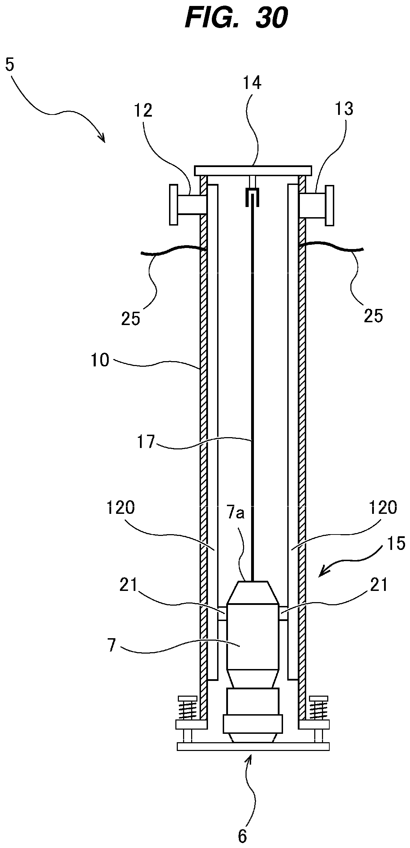

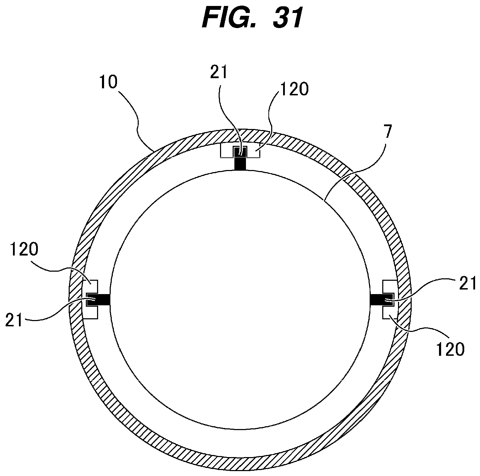

FIG. 30 is a diagram showing an embodiment of a pump system including still another embodiment of the power feeding apparatus 15, and FIG. 31 is a horizontal cross-sectional view of the pump system shown in FIG. 30. Configurations and operations of this embodiment, which will not be specifically described, are the same as those of the embodiments described with reference to FIGS. 28 and 29, and redundant descriptions thereof are omitted.

In this embodiment, the inner diameter of the pump column 10 is slightly larger than the outer diameter of the submersible pump 7. Therefore, all electrode rails 120 can be secured to the inner surface of the pump column 10 without using the beams 121 previously described for the placement of the electrode rails 120. In this embodiment, the power cables 25 for electrical connection between the electrode rails 120 and the power supply source outside the pump column 10 can pass through the side wall of the pump column 10 at any height.

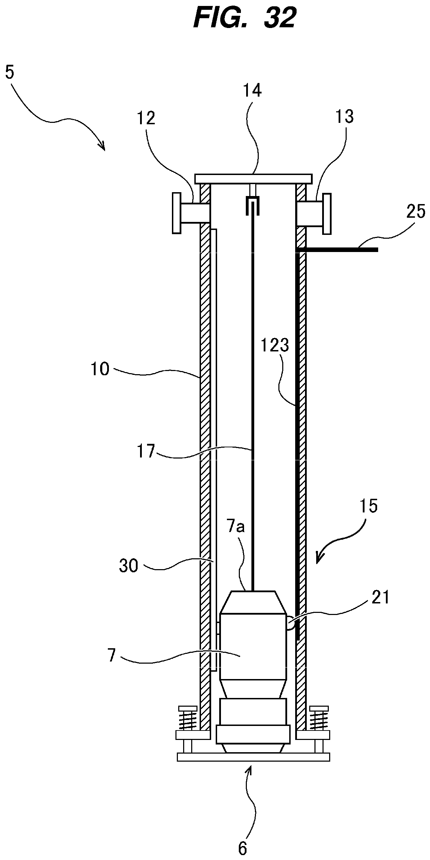

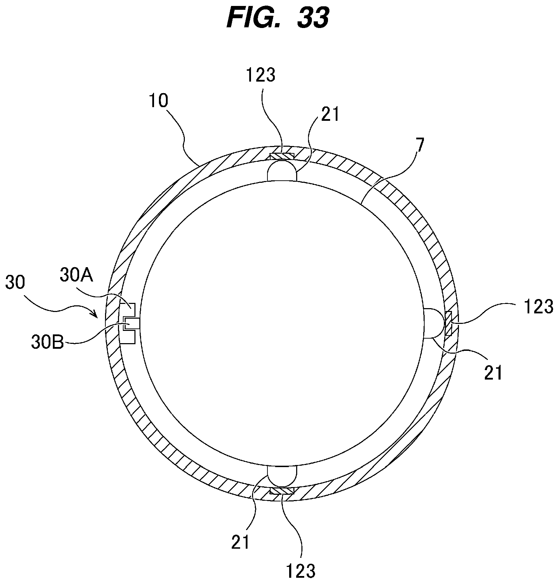

FIG. 32 is a diagram showing an embodiment of a pump system including still another embodiment of the power feeding apparatus 15, and FIG. 33 is a horizontal cross-sectional view of the pump system shown in FIG. 32. Configurations and operations of this embodiment, which will not be specifically described, are the same as those of the embodiments described with reference to FIGS. 30 and 31, and redundant descriptions thereof are omitted.

The power feeding apparatus 15 of the present embodiment includes a positioning mechanism 30 configured to restrain a circumferential movement of the submersible pump 7, first electrical contacts 21 secured to the submersible pump 7, and electrode bars 123 as second electrical contacts embedded in the inner surface of the pump column 10. As shown in FIG. 33, the positioning mechanism 30 has guide rail 30A secured to the pump column 10 and guide follower 30B secured to the submersible pump 7. Detailed configurations of the positioning mechanism 30 are the same as those of the previously described embodiment, and repetitive descriptions thereof will be omitted.

The electrode bars 123 as the second electrical contacts are made of metal embedded in the inner surface of the pump column 10 and extends in the vertical direction along the longitudinal direction of the pump column 10. The electrode bars 123 have exposed surfaces located at the inner surface of the pump column 10. There is no step between the exposed surfaces of the electrode bars 123 and the inner surface of the pump column 10, so that the exposed surfaces of the electrode bars 123 and the inner surface of the pump column 10 form a smooth curved surface. This configuration can prevent air from stagnating or accumulating around the electrode bars 123, and can therefore prevent the air from reacting with the liquefied gas, such as liquid hydrogen, in the vicinity of the electrode bars 123.

The electrode bars 123 may extend from the upper portion to the lower portion of the pump column 10 in the same manner as the guide rail 30A, or may be arranged at the same height as the submersible pump 7 when installed on the bottom of the pump column 10. The power cables 25 for electrical connection between the electrode bars 123 and the power supply source outside the pump column 10 pass through the side wall of the pump column 10.

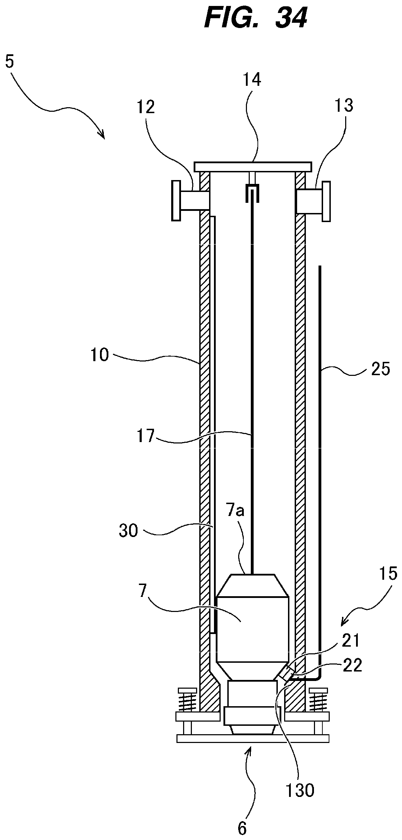

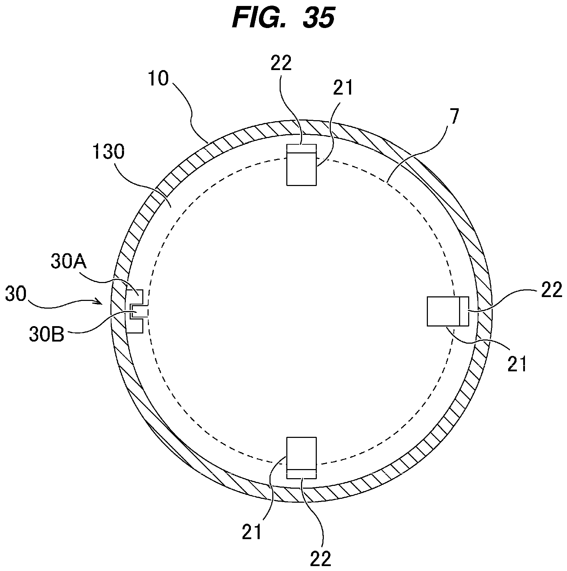

FIG. 34 is a diagram showing an embodiment of a pump system including still another embodiment of power feeding apparatus 15, and FIG. 35 is a horizontal cross-sectional view of the pump system shown in FIG. 34. Configurations and operations of this embodiment, which will not be specifically described, are the same as those of the embodiments described with reference to FIGS. 32 and 33, and redundant descriptions thereof are omitted.

The power feeding apparatus 15 of the present embodiment includes a positioning mechanism 30 configured to restrain a circumferential movement of the submersible pump 7, first electrical contacts 21 secured to the submersible pump 7, and second electrical contacts 22 secured to the inner surface of the pump column 10. The positioning mechanism 30 has guide rail 30A secured to the pump column 10 and guide follower 30B secured to the submersible pump 7. Detailed configurations of the positioning mechanism 30 are the same as those of the previously described embodiment, and repetitive descriptions thereof will be omitted.

The first electrical contacts 21 are secured to the side surface of the submersible pump 7 and faces obliquely downward. The second electrical contacts 22 are secured to an inclined upper surface of a pedestal 130 that protrudes radially inward from the inner surface of the pump column 10. The second electrical contacts 22 face obliquely upward. Contact surfaces of the first electrical contacts 21 and contact surfaces of the second electrical contacts 22 are inclined. This configuration can prevent air from stagnating or accumulating around the first electrical contacts 21 and the second electrical contacts 22, and can therefore prevent the air from reacting with the liquefied gas, such as liquid hydrogen, in the vicinity of the first electrical contacts 21 and the second electrical contacts 22.

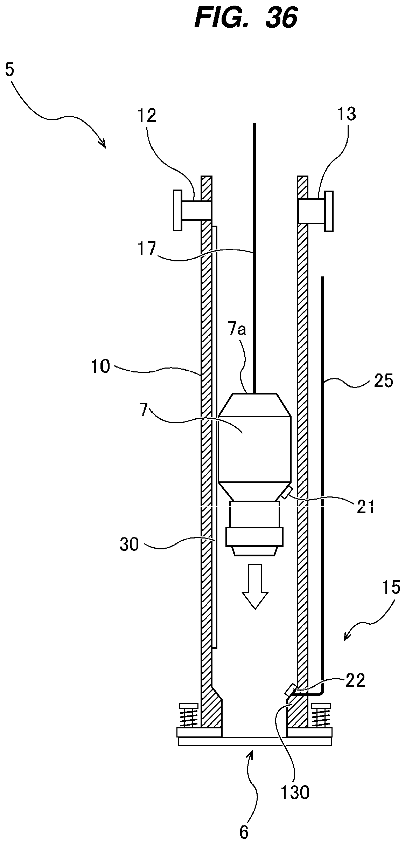

The second electrical contacts 22 are coupled to power cables 25, respectively. The power cables 25 extend through the side wall of the pump column 10 and are coupled to a power supply source (not shown). As shown in FIG. 36, the submersible pump 7 is lowered in the pump column 10 by the elevating device (see reference numeral 31 in FIG. 4) until the first electrical contacts 21 are brought into contact with the second electrical contacts 22. As a result, the electrical connection between the electric motor 7a of the submersible pump 7 and the power cables 25 is established.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments. Therefore, the present invention is not intended to be limited to the embodiments described herein but is to be accorded the widest scope as defined by limitation of the claims.

### Industrial Applicability

The present invention is applicable to a power feeding apparatus and a power feeding method for supplying power to submersible pump for delivering liquefied gas such as liquefied ammonia, liquefied natural gas (LNG), and liquid hydrogen.

### Reference Signs List

- 1: liquefied-gas tank facility
- 3: liquefied-gas storage tank
- 5: pump system
- 6: suction valve
- 7: submersible pump
- 7a: electric motor
- 10: pump column
- 12: purge-gas introduction port
- 13: liquefied-gas discharge port
- 14: upper lid
- 15: power feeding apparatus
- 17: suspension cable
- 21: first electrical contact
- 21a: first contact surface
- 22: second electrical contact
- 22a: second contact surface
- 25: power cable
- 25A: metal interconnect
- 25B: power feeding line
- 30: positioning mechanism
- 30A: guide rail
- 30B: guide follower
- 41: first contact assembly
- 42: second contact assembly
- 44: spring
- 45: support structure
- 47: base bracket
- 48: insulator
- 48a: through-hole
- 50: flange
- 54: tapered surface
- 55: reverse tapered surface
- 57: lead wire
- 59: electrical-contact holder
- 60: conductor
- 63: multi-contact
- 74: spring
- 75: insulator
- 77: base bracket
- 78: insulator
- 78a: through-hole
- 84: tapered surface
- 85: reverse tapered surface
- 89: electrical-contact holder
- 93: multi-contact
- 96: pulley
- 97: power feeding connector
- 99: power feeding line
- 100A,100B: electrical connector
- 105: suspension structure
- 107: guide groove
- 111: vertically-extending structure
- 111a: through-hole
- 112: electrical-contact holder
- 114: guide follower
- 120: electrode rail
- 121: beam
- 123: electrode bar
- 130: pedestal

## Claims

1. A power feeding apparatus for supplying electric power to a submersible pump used to deliver liquefied gas, comprising:
a first electrical contact secured to the submersible pump and electrically coupled to an electric motor of the submersible pump;
a second electrical contact configured to contact the first electrical contact, at least a part of the second electrical contact being located in a pump column in which the submersible pump is arranged; and
a power cable electrically coupled to the second electrical contact.

2. The power feeding apparatus according to claim 1, wherein the first electrical contact and the second electrical contact are movable relative to each other in a longitudinal direction of the pump column while the first electrical contact and the second electrical contact are in contact with each other.

3. The power feeding apparatus according to claim 1, wherein an entirety of the second electrical contact is located in the pump column, and at least a part of the power cable is located in the pump column.

4. The power feeding apparatus according to claim 1, wherein a part of the second electrical contact is located outside the pump column, and an entirety of the power cable is located outside the pump column.

5. The power feeding apparatus according to claim 1, further comprising a positioning mechanism configured to determine relative positions of the first electrical contact and the second electrical contact in a circumferential direction of the submersible pump.

6. The power feeding apparatus according to claim 1, wherein the power cable is secured to an inner surface or an outer surface of the pump column.

7. The power feeding apparatus according to claim 1, wherein the power cable has structural resistance to a low temperature below a boiling point of the liquefied gas.

8. The power feeding apparatus according to claim 1, further comprising:
a spring configured to press the first electrical contact against the second electrical contact; and
a support structure that movably supports the first electrical contact, a horizontal gap being formed between the first electrical contact and the support structure.

9. The power feeding apparatus according to claim 8, wherein the first electrical contact has a tapered surface, and the second electrical contact has a reverse tapered surface having a shape that conforms to the tapered surface.

10. The power feeding apparatus according to claim 8, further comprising a positioning mechanism configured to determine relative positions of the first electrical contact and the second electrical contact in a circumferential direction of the submersible pump, the positioning mechanism including a combination of a guide rail and a guide follower, a horizontal gap between the first electrical contact and the support structure being larger than a horizontal gap between the guide rail and the guide follower.

11. The power feeding apparatus according to claim 1, further comprising:
a spring configured to press the second electrical contact against the first electrical contact; and
a support structure that movably supports the second electrical contact, a horizontal gap being formed between the second electrical contact and the support structure.

12. The power feeding apparatus according to claim 11, wherein the second electrical contact has a tapered surface, and the first electrical contact has a reverse tapered surface having a shape that conforms to the tapered surface.

13. The power feeding apparatus according to claim 11, further comprising a positioning mechanism configured to determine relative positions of the first electrical contact and the second electrical contact in a circumferential direction of the submersible pump, the positioning mechanism including a combination of a guide rail and a guide follower, a horizontal gap between the second electrical contact and the support structure being larger than a horizontal gap between the guide rail and the guide follower.

14. The power feeding apparatus according to claim 1, further comprising:
pulleys and a power feeding connector arranged in the pump column; and
a power feeding line electrically coupled to the power feeding connector,
wherein the power cable comprises an endless power cable,
the endless power cable is movably supported by the pulleys,
the second electrical contact includes electrical connectors coupled to the endless power cable,
one of the electrical connectors is detachably coupled to the first electrical contact, and
another one of the electrical connectors is detachably coupled to the power feeding connector.

15. The power feeding apparatus according to claim 1, wherein the power cable comprises a metal interconnect embedded in an inner surface of the pump column, and a power feeding line electrically coupled to the metal interconnect.

16. The power feeding apparatus according to claim 1, further comprising a suspension structure extending in a vertical direction along an inner surface of the pump column, the suspension structure being removably arranged in the pump column, the second electrical contact being held by the suspension structure.

17. The power feeding apparatus according to claim 16, wherein the suspension structure extends from an upper portion to a lower portion of the pump column.

18. The power feeding apparatus according to claim 16, wherein the suspension structure has a guide groove or a guide rail with which a guide follower is engaged, the guide follower being mounted to the submersible pump.

19. The power feeding apparatus according to claim 1, wherein the second electrical contact comprises an electrode rail extending in a vertical direction from an upper portion to a lower portion of the pump column.

20. The power feeding apparatus according to claim 19, wherein the first electrical contact is configured to be movable on the electrode rail while engaging the electrode rail.

21. The power feeding apparatus according to claim 1, wherein the second electrical contact comprises an electrode bar embedded in an inner surface of the pump column.

22. A pump system comprising:
a submersible pump for delivering liquefied gas;
a pump column in which the submersible pump is arranged; and
the power feeding apparatus according to any one of claims 1 to 21.

23. A liquefied-gas tank facility comprising:
a liquefied-gas storage tank for storing liquefied gas therein;
a pump column arranged in the liquefied-gas storage tank;
a submersible pump for delivering the liquefied gas, the submersible pump being arranged in the pump column; and
the power feeding apparatus according to any one of claims 1 to 21.

24. A power feeding method for supplying electric power to a submersible pump used to deliver liquefied gas, comprising:
lowering the submersible pump in a pump column by an elevating device;
bringing a first electrical contact into contact with a second electrical contact, the first electrical contact being secured to the submersible pump and electrically coupled to an electric motor of the submersible pump, at least a part of the second electrical contact being located in the pump column; and
supplying electric power from a power cable to the electric motor via the second electrical contact and the first electrical contact, the power cable being electrically coupled to the second electrical contact.

25. The power feeding method according to claim 24, wherein the first electrical contact is brought into contact with the second electrical contact when the submersible pump is lowered to an operating position within the pump column.

26. The power feeding method according to claim 24, wherein the first electrical contact is separated from the second electrical contact when the submersible pump is elevated from the operating position by the elevating device.

27. The power feeding method according to claim 24, wherein the liquefied gas has an electrical insulating property.
